# EUROPEAN PATENT SPECIFICATION

(11) **EP 2 576 212 B1**
(45) Date of publication and mention of the grant of the patent: **22.01.2020**
(21) Application number: 11721615.0
(22) Date of filing: 10.05.2011
(51) Int. Cl.: B32B 15/08

(54) **SHAPE MEMORY ALLOY/FIBER REINFORCED POLYMERIC COMPOSITE STRUCTURES AND METHOD FOR FORMING**
FORMGEDÄCHTNISLEGIERUNGS-/FASERVERSTÄRKTE POLYMERVERBUNDSTRUKTUREN UND HERSTELLUNGSVERFAHREN
STRUCTURES COMPOSITES POLYMÈRES RENFORCÉES DE FIBRES/ALLIAGE À MÉMOIRE DE FORME ET PROCÉDÉ DE FORMATION

(30) Priority: 04.06.2010 US 351546 P; 02.11.2010 US 917740
(43) Date of publication of application: 10.04.2013
(73) Proprietor: The Boeing Company, Chicago, IL 60606-1596 (US)
(72) Inventor: BLOHOWIAK, Kay, Y., Issaquah WA 98027 (US); ZIMMERMAN, Tyler, J., Seattle WA 98109 (US); MABE, James, H., Seattle WA 98103 (US); CALKINS, Frederick, T., Renton WA 98058 (US); DILLIGAN, Matthew, A., Seattle WA 98168 (US)
(74) Representative: Howson, Richard Giles Bentham
(86) International application number: PCT/US2011/035989
(87) International publication number: WO 2011/152963

(56) References cited:
- WO-A2-2008/014058
- US-A1- 2004 175 555
- US-A1- 2006 123 918
- US-B1- 6 773 535
- TOSHIMICHI OGISU: "Development of damage suppression system using embedded SMA foil in CFRP laminates", PROCEEDINGS OF SPIE, vol. 4333, 1 January 2001 (2001-01-01), pages 387-398, XP55002798, ISSN: 0277-786X, DOI: 10.1117/12.432778
- TYLER J ZIMMERMAN ET AL: "Adhesive Bonding Of Hybrid Actuated Shape Memory Alloy-composite Structures", ADVANCED MATERIALS AND PROCESSES : ENABLING THE FUTURE ; 2010 SAMPE FALL TECHNICAL CONFERENCE & EXHIBITION, 11 - 14 OCTOBER 2010, SALT LAKE CITY, UTAH, BECKWITH, SCOTT W, US : SAMPE, 11 October 2010 (2010-10-11), page 14PP, XP009150311, ISBN: 978-1-934551-08-0
- TOSHIMICHI OGISU: "Application study on aircraft structures of CFRP laminates with embedded SMA foils", PROCEEDINGS OF SPIE, vol. 4698, 1 January 2002 (2002-01-01), pages 376-385, XP55004455, ISSN: 0277-786X, DOI: 10.1117/12.475085
- TOSHIMICHI OGISU: "Development of damage suppression system using embedded SMA foil sensor and actuator", PROCEEDINGS OF SPIE, vol. 3991, 1 January 2000 (2000-01-01), pages 62-73, XP55004457, ISSN: 0277-786X, DOI: 10.1117/12.388147
- P. BETTINI ET AL: "Carbon Fiber Reinforced Smart Laminates with Embedded SMA Actuators-Part I: Embedding Techniques and Interface Analysis", JOURNAL OF MATERIALS ENGINEERING AND PERFORMANCE, vol. 18, no. 5-6, 1 August 2009 (2009-08-01), pages 664-671, XP55004523, ISSN: 1059-9495, DOI: 10.1007/s11665-009-9384-z
- Pedro Cortes ET AL: "The fracture properties of a smart fiber metal laminate", POLYMER COMPOSITES, vol. 28, no. 4, 1 January 2007 (2007-01-01), pages 534-544, XP055226062, US ISSN: 0272-8397, DOI: 10.1002/pc.20319
- P. Cortes ET AL: "The morphing properties of a smart fiber metal laminate", POLYMER COMPOSITES, vol. 29, no. 11, 1 November 2008 (2008-11-01), pages 1263-1268, XP055226064, US ISSN: 0272-8397, DOI: 10.1002/pc.20454
- Masataro Amano ET AL: "Evaluation of Crack Suppression Effect of TiNi SMA Foil Embedded in CFRP Cross-Ply Laminates with Embedded Small-Diameter FBG Sensor", JSME International Journal, vol. 48, no. 4, 1 January 2005 (2005-01-01), pages 443-450, XP055226455, ISSN: 1344-7912, DOI: 10.1299/jsmea.48.443

## Description

### TECHNICAL FIELD

The disclosure generally relates to composite structures formed by a plurality of fiber reinforced polymeric plies and a plurality of sheets of shape memory alloy, and more particularly, the disclosure relates to composite structures that have a plurality of fiber reinforced polymeric plies and a plurality of sheets of shape memory alloy that are bonded together by adhesive and wherein the shape of the composite structure can be changed by heating the shape memory alloy to a transformation temperature.

### BACKGROUND

In the aircraft industry, increasing restrictions on environmental noise and emissions as well as fuel related operating costs, have put added demand on original equipment manufacturers (OEMs) to improve aircraft efficiency. The ability of morphing and adaptive the shape of aerodynamic surfaces offers many performance benefits that can help reach these new requirements. Morphing structures such as the Variable Geometry Chevron (VGC) have demonstrated the ability to selectively control surface geometry in order to modify the jet engine exhaust stream during takeoff and cruise to reduce community noise. The Boeing-designed VGC uses shape memory alloy (SMA) bend-type actuators that undergo a thermally induced shape change that reacts with the carbon fiber reinforced plastic (CFRP) chevron surface. Other potential applications for SMA-based aero-structures include morphing wing structures for lift-to-drag improvements during cruise.

SMAs are desirable active components for morphing structures which must be incorporated into small volume design envelopes. They are ideal for applications that require large force outputs that a motorized part could not otherwise achieve with traditional forms of actuation. Current designs for SMA-based morphing structures require metal hardware such as fasteners to join the SMA to the composite or aluminum aero-surface. The use of discrete connections can limit performance by concentrating load and thermal stresses in the SMA, fastener, and supporting structure. Fastener connections also limit design freedom by adding weight to the structure and occupying additional space.

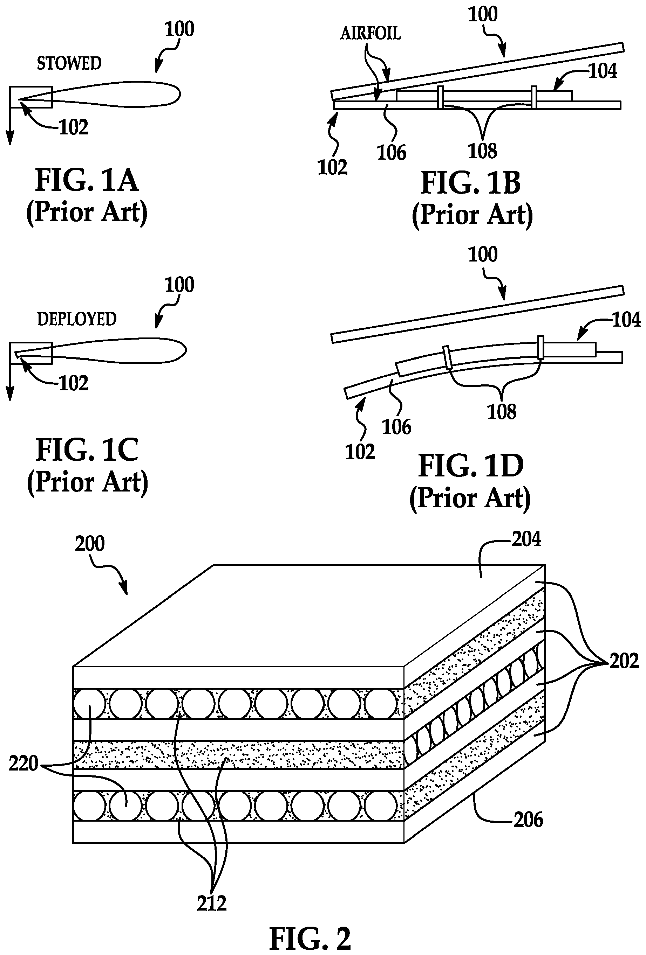

One of such current design for SMA-based morphing structures that require metal hardware such as fasteners is shown in Figures 1A-1D. The design shows an airfoil cross-section illustrating a deployable divergent trailing edge 102 for the airfoil 100. Figure 1A shows the airfoil 100 in a stowed position without the deployment. An illustrative cross-sectional view of the airfoil 100 is shown in Figure 1B as a conventional method for fastening the SMA actuator 104 to the outer surface 106 of the airfoil 100 by mechanical fasteners 108. The stowed divergent trailing edge 102 has limited design space due to the bar actuator geometry and the fasteners 108.

Figures 1C and 1D further show the airfoil provided with SMA actuator by mechanical fastening in a deployed condition. Figure 1C shows a divergent trailing 112 after the SMA actuator 104 has been actuated. Figure ID illustrates the deployed divergent trailing edge 102 with the SMA actuator 104 mechanically fastened to the outer surface 106 where large localized stresses occur at location for fastener 108 in the substrate 106 and the actuator 104.

Accordingly, it would be advantageous to develop an adhesively bonded SMA-FRPP joint to increase morphing structure design space and efficiency.

### SUMMARY

An adhesively bonded SMA-FRPP (Fiber Reinforced Polymeric Plies) laminate actuated structure is disclosed. SMA actuators were adhesively bonded to 121°C (250°F) cure toughened epoxy. Sol-gel surface preparation techniques were used to prepare the bonding surface of the nickel-titanium (nitinol) actuators. A hot press was used to restrain the actuator/laminate assembly during adhesive cure. Finite element analysis using a thermomechanical constitutive model of the shape-memory behavior was used to analyze stress concentrations in both the adhesively bonded and mechanically fastened structures during the actuation cycle. The performance and durability of the bonded hybrid structures was tested by measuring the laminate deflection throughout prolonged thermally induced actuation cycles. These results were then compared to similar hybrid structures joined by mechanical fastening. The disclosure demonstrates the viability and efficiency of adhesive bonding for morphing aerodynamic structures.

The disclosure is generally directed to a composite structure having at least two carbon fiber prepreg plies, and at least one sheet of shape memory alloy in between the at least two carbon fiber prepreg plies. The sheet of shape memory alloy may have a thickness between about 0.002 inches and about 0.25 inches (conversion factor inches into centimetres: 1 inch = 2.54 cm). The sheet of shape memory alloy may also have an adhesive bond primer layer and an epoxy adhesive layer on its top and bottom surfaces.

The disclosure is also directed to a composite structure having at least two sheets of shape memory alloy, and at least one carbon fiber prepreg ply in between the at least two sheets of shape memory alloy.

The disclosure is further generally directed to a carbon fiber composite structure having a first plurality of carbon fiber prepreg plies and a second plurality of sheets of shape memory alloy interleaved with the first plurality of carbon fiber prepreg plies. The second plurality of sheets of the shape memory alloy each having a thickness between about 0.002 inches and 0.25 inches. The second plurality of sheets of shape memory alloy may further have at least one of its top and bottom surfaces coated with an adhesive bond primer layer and an epoxy resin adhesive layer. The adhesive bond primer layer may be a sol-gel coating layer.

The disclosure is further generally directed to a method for fabricating a carbon fiber composite structure including the steps of providing a first plurality of carbon fiber prepreg plies; providing a second plurality of sheets of shape memory alloy; coating at least one of a top and a bottom surface of one of the second plurality of sheets of shape memory alloy with an adhesive bond primer layer; coating a layer of epoxy resin adhesive on the coated sheets of shape memory alloy; interleaving the coated sheets of shape memory alloy with at least two of the first plurality of carbon fiber prepreg plies forming a laminate; and curing under heat and pressure the laminate forming the carbon fiber composite structure.

In some embodiments, the method for fabricating a carbon fiber composite structure may further include the step of providing the second plurality of sheets of shape memory alloy with a thickness between about 0.002 and about 0.25 inches; or providing the second plurality of sheets of shape memory alloy on at least one of the its top and bottom surfaces with an adhesive bond primer layer and an epoxy resin adhesive layer; the adhesive bond primer may be a sol-gel material, or epoxy bond primer, or both. The method may further include the step of curing the laminate at a temperature between about 200°F and about 500°F (conversion factor Fahrenheit into Centigrades: t/°C = (t/°F - 32)/1.8), and at a pressure of at least 40 PSI (conversion factor 1 psi = 6,894.76 pascals (Pa)). The actuators are joined to the interior surface of wing, not the outer surface where the airstream is.

The disclosure is further generally directed to a method for morphing a composite structure including the steps of providing a first plurality of carbon fiber prepreg plies; providing a second plurality of shape memory alloy sheets each coated with an epoxy adhesive on a top and/or bottom surfaces; interleaving the second plurality of shape memory alloy sheets with the first plurality of carbon fiber prepreg plies forming the composite structure; and morphing the composite structure by heating to a minimum temperature at which the shape memory alloy transforms from a first crystalline state to a second crystalline state.

In some embodiments, the method for morphing a composite structure may further include the step of providing the second plurality of shape memory alloy sheets in a nickel-titanium alloy; may further include the step of transforming a nickel-titanium alloy from a martensite structure to an austenite structure; may further include the step of heating the composite structure to a temperature of at least 110°F or may further include the step of heating the composite structure to a temperature between about 110°F and about 320°F.

### BRIEF DESCRIPTION OF THE ILLUSTRATIONS

Figures 1A-1D are illustrations of an airfoil cross-sections having a deployable divergent trailing edge by using SMA actuators joined to the inner surface using conventional fasteners.
Figure 2 is a perspective view of a nickel-titanium-Fiber Reinforced Polymeric Plies hybrid laminate showing metal foils interleaved with reinforced epoxy layers.
Figure 3 is an illustration of an enlarged, cross-sectional view of the SMA/FRPP morphing structure.
Figures 4A and 4B are illustrations of cross-sectional views of a SMA/CFRP (Carbon Fiber Reinforced Prepreg) morphing structure prior to and after transformation, respectively.
Figures 5A and 5B illustrates the testing arrangement for the SMA/CFRP composite panels.
Figures 6 and 6A are a perspective view and enlarged view of the test sample of SMA/CFRP composite panel complete with heaters and thermocouple wires.
Figure 7A-7D are illustrations of an adhesive bonded SMA/CFRP composite structure of an airfoil morphing to a divergent trailing edge.
Figure 8 is an illustration of a flow diagram for a method of fabricating a carbon fiber composite structure.
Figure 9 is an illustration of a flow diagram for a method of morphing a composite structure bonded together by adhesives.
Figure 10 is an illustration of a flow diagram of an aircraft production and service methodology.
Figure 11 is an illustration of a block diagram of an aircraft.

### DETAILED DESCRIPTION

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to practice the disclosure and are not intended to limit the scope of the appended claims. Furthermore, there is no intention to be bound by any expressed or implied theory presented in the preceding technical field, background, brief summary or the following detailed description.

Morphing aerostructures with shape memory alloy (SMA) actuators is one approach being developed to reduce community noise from commercial aircraft. To achieve this end, two things are needed. First, the design of aerostructures that are integrally actuated with SMA materials requires an optimization approach to arrive at a successful design. This is a consequence of the unique behavior of SMA materials that requires an actuator to be under load when installed to activate its shape change properties. Second, an efficient means of integrating SMA actuators into an aerostructure is needed. Integrally placing thin sheets or foils of nitinol within the structure and controlling the interfaces is one means of achieving that.

Shape memory alloys (SMA) can predictably change shape when undergoing a transition from the martensitic to the austenitic state over a specific temperature range. When joined to a composite structure, the structure itself can morph into shapes for specific purposes. SMA actuators can be formed into thick bars or rods of material that can be mechanically joined or bonded to the composite structure. Alternatively, SMA actuators can be formed as thin sheets or foils. When formed as thin sheets, the alloy can be incorporated into the composite structure by selectively placing the material within the ply layup of the composite. This enables the efficient design of the morphing capability specifically where the shape change capability is desired. Multiple plies of SMA foil can be placed in locations where greater deformation of the composite part is desired. The manufacture of these SMA fiber-metal laminates (FMLs) requires adhesion of the SMA surface to the composite laminate resin. Sol-gel surface preparation methods were shown to be effective in preparing SMA surfaces for adhesive bonding. A thin layer toughened epoxy adhesive, originally designed for TiGr FMLs can be used to provide strong interlaminar bonding. Careful design of the layup is needed to efficiently transfer the load between the layers during the deformation process such that the actuation is efficiently enabled and will not destroy the structure during the shape changing process.

The preparation of test samples including SMA surface preparation and joint assembly is disclosed as follows: strips of 60-nitinol (60 weight percent nickel or any other suitable metal, and titanium) were water jet cut to dimensions of 10 inches (25.4 cm) by 1.0 inch (2.54 cm) and 0.11 inch (0.28 cm) thickness. Other nickel alloys such as NiTiPd, NiTiPt, NiTiCu, etc. may also be used as the SMA. The SMA specimens were clamped over a high-temperature tool with a 15-inch (38.1 cm) radius of curvature and heat treated in a high temperature furnace to create the shape memory effect and set the transformation temperatures. The arc height of the resulting actuators was measured at 0.79 inches (2.0 cm) equivalent to 15.4 inches (39.1 cm) radius of curvature.

The surface of the SMA actuators was pretreated using the abrasive blasting sol-gel method according to Boeing Specification BSPS-07-001 Class 2. Actuators were immersed in an aqueous degreasing solution for 15 minutes and rinsed in cold water. They were then immersed in alkaline cleaning solution for 15 minutes and rinsed in cold water. The thermal oxide layer formed during the shape setting process was removed by abrasive blasting with 180 grit aluminum oxide. Boegel EPII solution was spray applied to the bonding surface and allowed to dry for one hour. BR6747-1 (from Cytec Engineered Materials, Inc.) epoxy bond primer was spray applied over the Boegel surface, dried at ambient conditions, and cured for 60 minutes at 250°F (121°C).

After shape setting, the SMA actuators remain in their curved austenite shape, and required manual flattening before application of the adhesive. During this process the actuators were wrapped in cheesecloth to avoid damage and contamination of the primed surface. Wrapped actuators were cantilevered in a bench top vice and bent back against the curvature in 1-inch (2.54 cm) increments until straight.

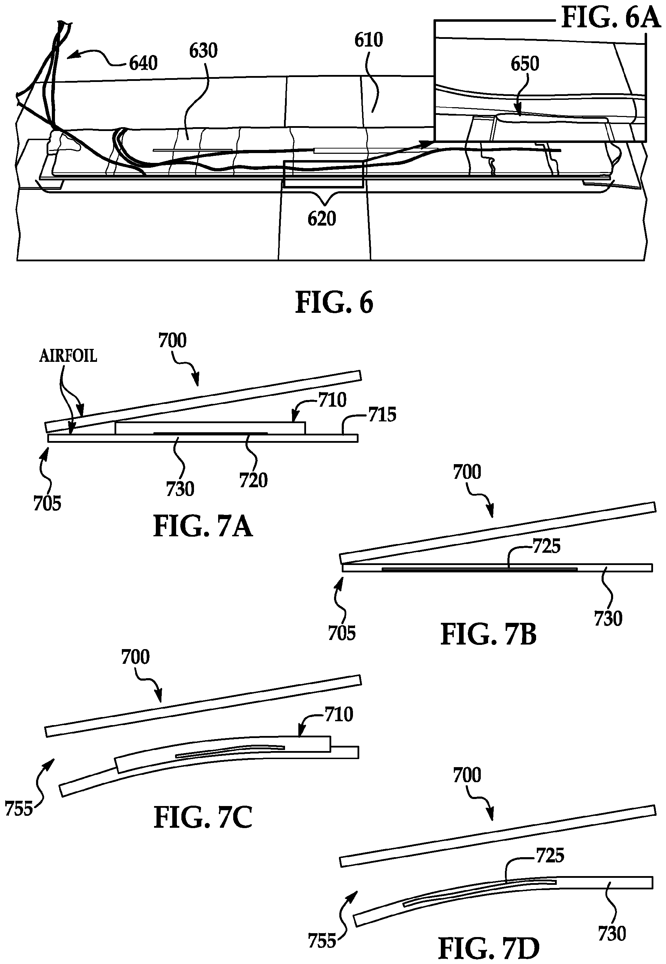

The one-way SMA actuators used were only capable of actively transforming to their higher temperature austenite set shape, and as such they required a preload to restore them to an initial martensite shape. Because of the large difference in strength moduli between the martensite (tensile: 4 Msi) and austenite (tensile: 8-10 Msi) phases of 60-nitinol, the stiffness of CFRP panels can be tailored by ply number and orientation to flex in the austenite phase and remain rigid in the martensite phase. Composite panels were made from epoxy prepreg in unidirectional tape and interwoven fabric form. Nine plies of prepreg were laid up with the stacking sequence in Table 1. The panel was autoclave cured at 350°F. Individual panels were cut by water jet to 4 inches (10.2 cm) by 12 inches (30.5 cm) with the 0° ribbon direction parallel to the 12 inch dimension. An area slightly larger than the bond area on the tool side of the panels in Figure 6 was abrasive blasted with 180 grit aluminum oxide to prepare the surface for bonding.

**Table 1. Stacking sequence for CFRP panels**

| **Ply No.** | **Material** | **Orientation** |
|---|---|---|
| 1 | Fabric | 0/90 |
| 2 - 8 | Tape | 0 |
| 9 | Fabric | 0/90 |
| Fabric: BMS8-276 Type 40, Class 2, Style 6K-70-PW, Form 1 | | |
| Tape: BMS8-276 Type 35, Class 10, Grade 190, Form 3 | | |

A toughened epoxy film adhesive (Hysol EA9696OST Grade 10 from Henkel) was used to join the SMA actuator to the CFRP panel. A 1 inch (2.54 cm) by 1 inch strip of the adhesive was placed at the center of the primed actuator and assembled as shown in Figure 6. Shims of 0.010 inches (0.254 mm) thickness were placed between the SMA and CFRP near the adhesive zone to control the bondline thickness during cure. The SMA/CFRP assemblies were placed in a heated press and allowed to cure for 90 minutes at 250°F (121°C) under 45 psi of pressure. The use of a heated press was necessary to confine the SMA from actuating during the elevated temperature cure and maintain a constant pressure at the bondline. The selection of an adhesive for use in these hybrid structures depends on the eventual application. In general, the use of highly toughened epoxy adhesives is preferred to achieve the high level of strength and durability required in the structure as well as provide the toughness necessary to withstand the peel forces and cyclic loading that occurs with each actuation cycle.

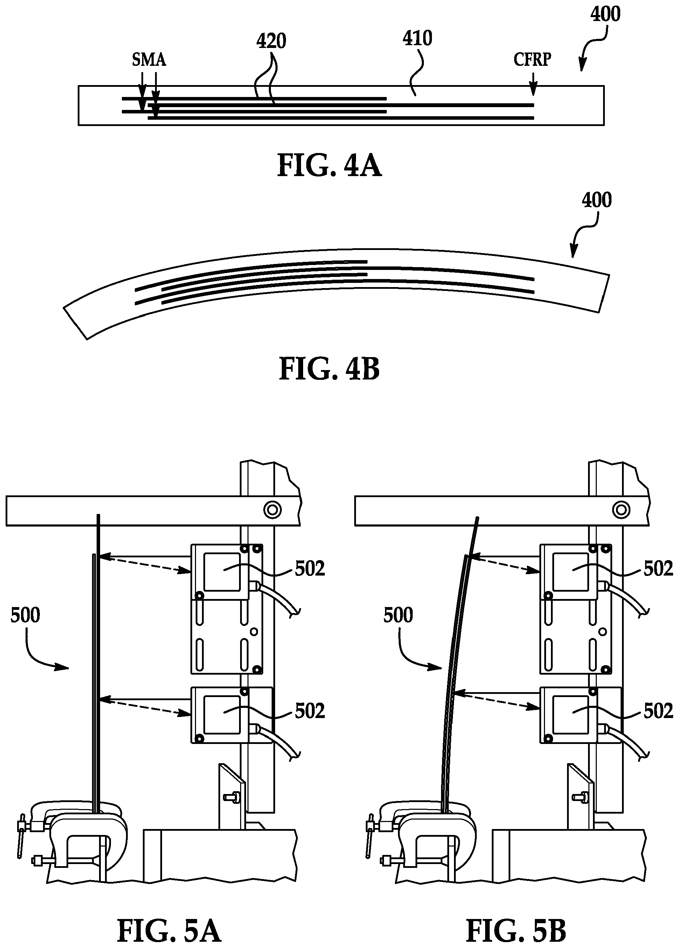

Long-term thermocycling tests were conducted on SMA beam actuators prepared by the sol-gel method and adhesively bonded to CFRP panels in order to determine joint durability and overall assembly shape during actuation. The tests were designed to track the amount of CFRP bending resulting from a thermally induced nitinol martensite to austenite phase transformation using a reflective laser deflection sensor incident on the CFRP panel. An illustration of the test setup is shown in Figures 5A and 5B. Tests were conducted to observe the affect of adhesive type and joint geometry on final actuation shape. Laser sensors 502 measure the amount of deflection during a thermally induced nitinol phase transformation from martensite to austenite. An illustration of a simple adhesive joint configuration is shown in Figure 6.

Figure 6 is an illustration showing a simple adhesive joint configuration of a CFRP panel 610, an SMA actuator 620, a series of strip heaters 630 and thermocouple wires 640. The epoxy adhesive layer 650 is shown in the enlarged view of Figure 6A taken from Figure 6. The strip heaters 630 are taped to the surface of the SMA actuator 620 to induce a phase transformation in the nitinol actuation. Figure 6 illustrates a simple 1 inch by 1 inch joint configuration for a SMA actuator 620 adhesively bonded to a CFRP panel 610 for actuation study.

Referring initially to Figure 2, wherein a perspective view of a SMA/FRPP composite structure 200 is shown. The nickel-titanium foils 202 are utilized which has a nominal thickness between about 0.002 inches and about 0.25 inches. The nickel titanium foils (or any other suitable SMA foils) 202 are incorporated into plies of fiber reinforced plies 212 (containing reinforcing fibers 220) forming the composite laminate structure 200. The top surface 204 and the bottom surface 206 are formed of the metal foil 202.

The word "about" used in this disclosure defines a numerical range of +/- 5 percent of the numerical number given. For instance, a thickness of about 0.25 inches would mean a range of thickness between 0.2375 and 0.2625 inches.

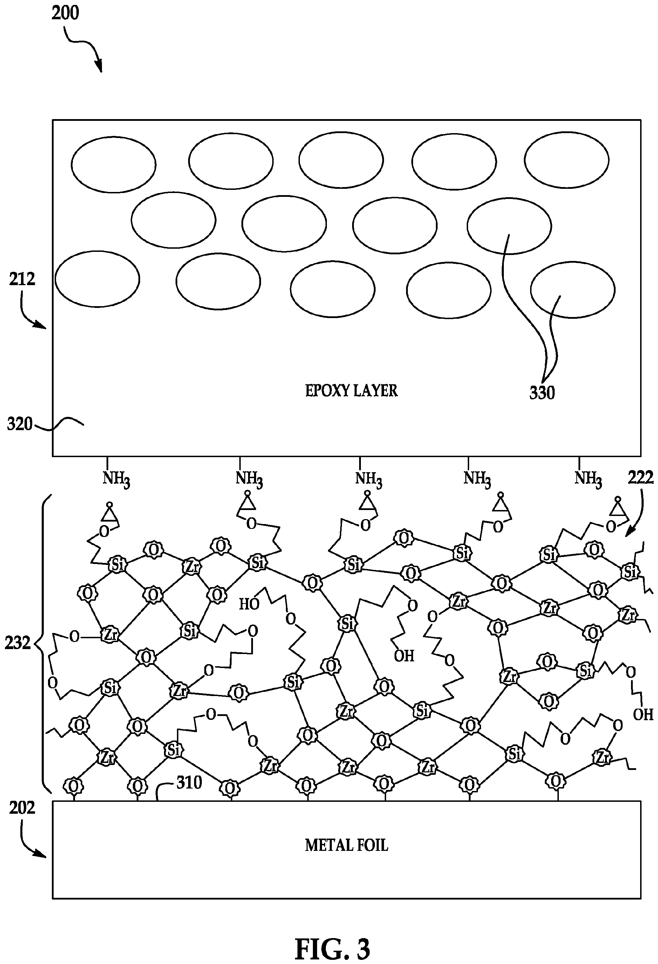

The interface 232 between the metal foil layer 202 and the fiber 330 reinforced polymeric layer 212 is structured to provide a gradient layer that transitions from the nickel-titanium metal surface to the polymeric matrix 320. This is shown in Figure 3 in an enlarged cross-sectional view.

Also shown in Figure 3 is a sol-gel material 222 interface which functions as an adhesion promoting layer or an adhesive bond primer layer. The fibers 330, of carbon or other fibers, are shown in a transverse direction, or perpendicular to the paper surface, similar to that shown in Figure 2 of layer 212 in the top and bottom layers.

Figures 4A and 4B illustrates cross-sectional views of a SMA/CFRP composite panel 400 in a pre-transformation and post-transformation state, respectively. In the pre-transformation state, the SMA exists in a martensite phase, while in the post-transformation state, the SMA exists in an austenite phase. Selective placement of the plies 410 of CFRP and the SMA foil sheet 420 can produce specific morphing properties.

The cross-sectional view of the hybrid SMA/CFRP laminate 400 shown in 4B indicates that the final shape of the structure in the SMA austenite phase can be tailored by selective placement of the SMA foil 420 within the CFRP plies 410.

The present disclosure therefore provides the design of hybrid laminate SMA/FML (fiber metal laminate) systems to produce specific morphing properties. The treatment of SMA to produce a gradient layer on the surface and making it bondable to typically used epoxy prepreg system is also provided by the present disclosure. The present disclosure further develops and selects an adhesive that can provide a suitable transition from the nitinol foil actuator and CFRP part such that actuation can occur without degradation of the structure.

The disclosure enables the bonding of SMA to CFRP by adhesive means which enables more aerodynamic surfaces, lighter weight structures, and further produces more efficient hybrid actuators. The proposed applications of SMA/FML structure (or SMA/CFRP structure) include commercial aircraft adaptive trailing edge devices such as a deployable divergent trailing edge. An illustration is shown in Figures 7A-7D. These figures illustrate an aircraft wing cross-section 700 wherein the actuators of SMA 710 are joined to a CFRP surface 715 by using an adhesive layer 720.

Figures 7A and 7B illustrates the airfoil 700 in a stowed state prior to the phase transformation. For instance, Figure 7A illustrates a stowed divergent trailing edge 705 with a SMA actuator 710 adhesively bonded to a composite skin 730. Reduced weight and improved design space can be achieved by this design shown in Figure 7A. Figure 7B illustrates a stowed divergent trailing edge 705 with multiple 0.006-inch thick SMA foil layers 725 interlaminated in the CFRP 730.

Figure 7C illustrates a deployed divergent trailing edge wherein the SMA actuator 710 is actuated to produce a deployed divergent trailing edge 755 wherein the SMA actuator 710 is adhesively bonded to the CFRP 730. Figure 7D illustrates a similar view as in Figure 7C which shows deployed divergent trailing edge 755 with laminated SMA/CFRP actuator.

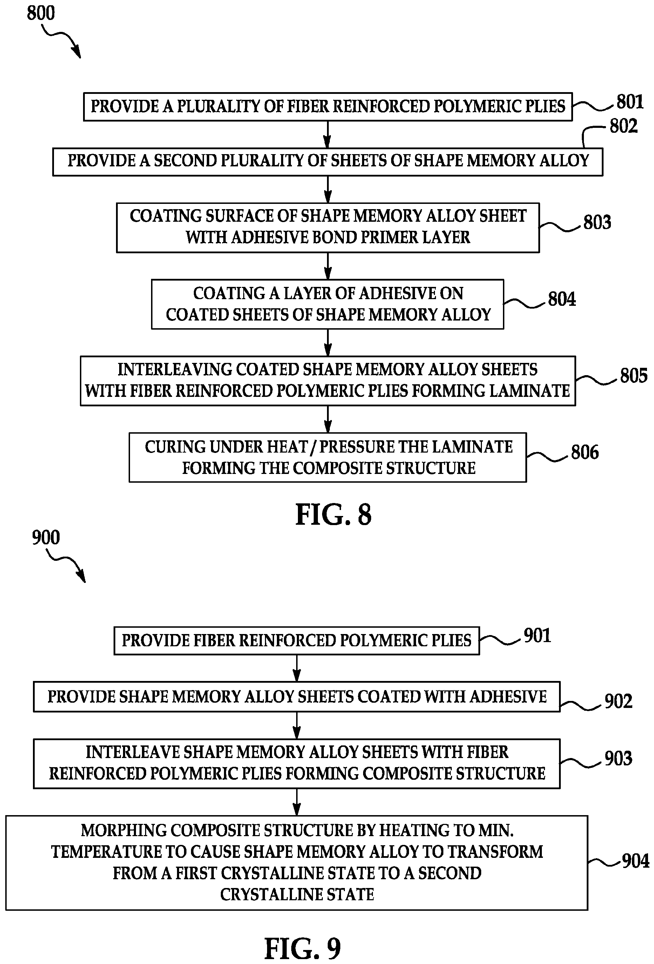

Referring now to Figure 8, wherein a flow diagram of the present disclosure method for fabricating a carbon fiber composite structure is shown. The method 800 is started by first step 801 of providing a first plurality of carbon fiber prepreg plies, followed by step 802 of providing a second plurality of sheets of shape memory alloy; followed by step 803 of coating at least one of a top and a bottom surface of one of the second plurality of sheets of shape memory alloy with an adhesive bond primer layer; followed by step 804 of coating a layer of epoxy resin adhesive on the coated sheets of shape memory alloy; and by step 805 of interleaving coated shape memory alloy sheets with carbon fiber prepreg plies forming a laminate; and finally the step 806 of curing under heat and pressure the laminate forming the carbon fiber composite structure.

The present disclosure further discloses a method for morphing a composite structure which is shown in Figure 9 in a flow diagram. The method 900 for morphing a composite structure can be started by the first step 901 of providing a first plurality of carbon fiber prepreg plies; followed by step 902 of providing a second plurality of shape memory alloy sheets each coated with an epoxy adhesive on a top and a bottom surface; followed by step 903 of interleaving the second plurality of shape memory alloy sheets with the first plurality of carbon fiber prepreg plies forming the composite structure; and finally by step 904 of morphing the composite structure by heating to a predetermined temperature at which the shape memory alloy transforms from a first crystalline state to a second crystalline state.

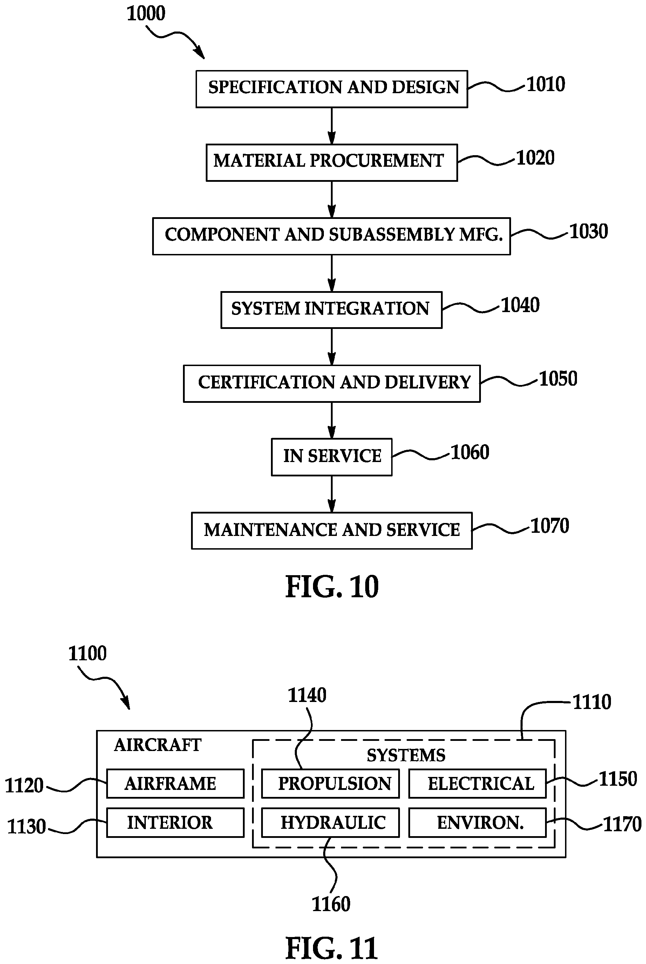

Referring next to FIGS. 10 and 11, embodiments of the disclosure may be used in the context of an aircraft manufacturing and service method 1000 as shown in FIG. 10 and an aircraft 1100 as shown in FIG. 11. During pre-production, exemplary method 1000 may include specification and design 1010 of the aircraft 1100 and material procurement 1020. During production, component and subassembly manufacturing 1030 and system integration 1040 of the aircraft 1100 takes place. Thereafter, the aircraft 1100 may go through certification and delivery 1050 in order to be placed in service 1060. While in service by a customer, the aircraft 1100 may be scheduled for routine maintenance and service 1070 (which may also include modification, reconfiguration, refurbishment, and so on).

Each of the processes of method 1000 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 11, the aircraft 1100 produced by exemplary method 1000 may include an airframe 1120 with a plurality of systems 1110 and an interior 1130. Examples of high-level systems 1110 include one or more of a propulsion system 1140, an electrical system 1150, a hydraulic system 1160, and an environmental system 1170. Any number of other systems may be included. Although an aerospace example is shown, the principles of the invention may be applied to other industries, such as the automotive industry.

The apparatus embodied herein may be employed during any one or more of the stages of the production and service method 1000. For example, components or subassemblies corresponding to production process 1030 may be fabricated or manufactured in a manner similar to components or subassemblies produced while the aircraft 1100 is in service. Also one or more apparatus embodiments may be utilized during the production stages 1030 and 1040, for example, by substantially expediting assembly of or reducing the cost of an aircraft 1100. Similarly, one or more apparatus embodiments may be utilized while the aircraft 1100 is in service, for example and without limitation, to maintenance and service 1070.

In yet another aspect, a method is disclosed for morphing a composite structure comprising the steps of: providing a first plurality of fiber reinforced polymeric prepreg plies 212; providing a second plurality of shape memory alloy layers each coated with an adhesive on at least one of a top and bottom surfaces; and morphing said composite structure by heating to a predetermined temperature at which said shape memory alloy transforms from a first crystalline state to a second crystalline state. In one variant, the method for morphing a composite structure includes the step of providing said plurality of shape memory alloy layers in a nickel-titanium alloy. In yet another variant, the method for morphing a composite structure includes the step of heating said composite structure to a temperature of at least 110°F during said morphing step. In one alternative, the method for morphing a composite structure includes the step of heating said composite structure to a temperature between about 110°F and about 320°F during said morphing step.

Although the embodiments of this disclosure have been described with respect to certain exemplary embodiments, it is to be understood that the specific embodiments are for purposes of illustration and not limitation, as other variations will occur to those of skill in the art.

## Claims

1. A composite structure comprising:
at least two layers of shape memory alloy; and
at least one fiber reinforced polymeric layer (212) in between said at least two layers of shape memory alloy,
wherein an interface (232) between a metal foil layer (202) and the fiber reinforced polymeric layer (212) is structured to provide a gradient layer that transitions from a nickel-titanium metal surface to a polymeric matrix (320).

2. The composite structure according to claim 1, wherein said at least two layers of shape memory alloy each having a thickness between 0.051 +/- 5% mm and 6.35 +/- 5% mm (0.002 +/- 5% and 0.25 +/- 5% inches).

3. The composite structure according to any of claims 1 or 2, wherein said at least two layers of shape memory alloy each having on one of its top and bottom surfaces at least one adhesion promoter layer (222) and a layer of an adhesive (650).

4. The composite structure according to any of claims 1-3, wherein said at least one fiber reinforced polymeric layer (212) is reinforced by at least one fiber selected from the group consisting of carbon fiber and glass fiber.

5. The composite structure according to any of claims 1-4, wherein said layer of an adhesive (650) is a layer of an epoxy adhesive.

6. A method for morphing a composite structure comprising the steps of:
providing a first plurality of fiber reinforced polymeric prepreg plies (212);
providing a second plurality of shape memory alloy layers each coated with an adhesive on at least one of a top and bottom surfaces; and
morphing said composite structure by heating to a predetermined temperature at which said shape memory alloy transforms from a first crystalline state to a second crystalline state,
wherein an interface (232) between a metal foil layer (202) and the fiber reinforced polymeric layer (212) is structured to provide a gradient layer that transitions from a nickel-titanium metal surface to a polymeric matrix (320).

7. The method for morphing a composite structure according to claim 6 further comprising the step of providing said plurality of shape memory alloy layers in a nickel-titanium alloy.

8. The method for morphing a composite structure according to any of claims 6-7 further comprising the step of heating said composite structure to a temperature of at least 43°C (110°F) during said morphing step.

9. The method for morphing a composite structure according to any of claims 6-8 further comprising the step of heating said composite structure to a temperature between about 43°C (110°F) and about 160°C (320°F) during said morphing step.

10. A composite structure comprising of any one of claims 1-5 that is formed by the method of any one of claims 7-11.

11. A method of any one of claims 6-9 that forms a composite structure comprising any one of the claims 1-5.

12. A hybrid laminate SMA/FML (fiber metal laminate) system to produce specific morphing properties of a composite structure comprising of any one of claims 1-5 that is formed by the method of any one of claims 6-9.

## Patentansprüche

1. Verbundstruktur, die Folgendes aufweist:
mindestens zwei Schichten aus Formgedächtnislegierung und
mindestens eine faserverstärkte Polymerschicht (212) zwischen den mindestens zwei Schichten aus Formgedächtnislegierung,
wobei eine Grenzfläche (232) zwischen einer Metallfolienschicht (202) und der faserverstärkten Polymerschicht (212) strukturiert ist, um eine Gradientenschicht bereitzustellen, die von einer Nickel-Titan-Metalloberfläche in eine Polymermatrix (320) übergeht.

2. Verbundstruktur nach Anspruch 1, wobei die mindestens zwei Schichten aus Formgedächtnislegierung jeweils eine Dicke zwischen 0,051 +/-5 % mm und 6,35 +/-5 % mm (0,002 +/-5 % und 0,25 +/-5 % Zoll) haben.

3. Verbundstruktur nach einem der Ansprüche 1 oder 2, wobei die mindestens zwei Schichten aus Formgedächtnislegierung jeweils auf einer ihrer oberen und unteren Flächen mindestens eine Haftvermittlerschicht (222) und eine Schicht aus einem Klebstoff (650) aufweisen.

4. Verbundstruktur nach einem der Ansprüche 1 bis 3, wobei die mindestens eine faserverstärkte Polymerschicht (212) durch mindestens eine Faser verstärkt ist, die aus der Gruppe, bestehend aus Kohlenstoffasern und Glasfasern, ausgewählt ist.

5. Verbundstruktur nach einem der Ansprüche 1 bis 4, wobei die Schicht eines Klebstoffs (650) eine Schicht eines Epoxidklebstoffs ist.

6. Verfahren zum Umwandeln einer Verbundstruktur, welches die folgenden Schritte aufweist:
Bereitstellen einer ersten Vielzahl von faserverstärkten Polymer-Prepreg-Lagen (212);
Bereitstellen einer zweiten Vielzahl von Schichten aus Formgedächtnislegierung, die jeweils mit einem Klebstoff auf mindestens einer von einer oberen und unteren Fläche beschichtet sind; und
Umwandeln der Verbundstruktur durch Erwärmen auf eine vorbestimmte Temperatur, bei der die Formgedächtnislegierung von einem ersten kristallinen Zustand in einen zweiten kristallinen Zustand übergeht,
wobei eine Grenzfläche (232) zwischen einer Metallfolienschicht (202) und der faserverstärkten Polymerschicht (212) strukturiert ist, um eine Gradientenschicht bereitzustellen, die von einer Nickel-Titan-Metalloberfläche in eine Polymermatrix (320) übergeht.

7. Verfahren zum Umwandeln einer Verbundstruktur nach Anspruch 6, das ferner den Schritt des Bereitstellens der Vielzahl von Formgedächtnislegierungsschichten in einer Nickel-Titan-Legierung aufweist.

8. Verfahren zum Umwandeln einer Verbundstruktur nach einem der Ansprüche 6 bis 7, das ferner den Schritt des Erwärmens der Verbundstruktur auf eine Temperatur von mindestens 43 °C (110 °F) während des Umwandlungsschritts aufweist.

9. Verfahren zum Umwandeln einer Verbundstruktur nach einem der Ansprüche 6 bis 8, das ferner den Schritt des Erwärmens der Verbundstruktur auf eine Temperatur zwischen etwa 43 °C (110 °F) und etwa 160 °C (320 °F) während des Umwandlungsschritts aufweist.

10. Verbundstruktur nach einem der Ansprüche 1 bis 5, die durch das Verfahren nach einem der Ansprüche 7 bis 11 gebildet ist.

11. Verfahren nach einem der Ansprüche 6 bis 9, das eine Verbundstruktur nach einem der Ansprüche 1 bis 5 bildet.

12. Hybridlaminat-FGL/FML (Faser-Metall-Laminat)-System zur Erzeugung spezifischer Umwandlungseigenschaften einer Verbundstruktur nach einen der Ansprüche 1 bis 5, die durch das Verfahren nach einem der Ansprüche 6 bis 9 gebildet ist.

## Revendications

1. Structure composite comprenant :
au moins deux couches d'alliage à mémoire de forme ; et
au moins une couche de polymère renforcée par des fibres (212) entre lesdites au moins deux couches d'alliage à mémoire de forme,
dans laquelle une interface (232) entre une couche de film métallique (202) et la couche de polymère renforcée par des fibres (212) est structurée pour fournir une couche de gradient qui passe d'une surface métallique de nickel-titane à une matrice de polymère (320).

2. Structure composite selon la revendication 1, dans laquelle lesdites au moins deux couches d'alliage à mémoire de forme présentant chacune une épaisseur entre 0,051 +/- 5 % mm et 6,35 +/-5 % mm (0,002 +/- 5 % et 0,25 +/- 5 % pouces).

3. Structure composite selon l'une quelconque des revendications 1 ou 2, dans laquelle lesdites au moins deux couches d'alliage à mémoire de forme présentant chacune sur une de leurs surfaces supérieure et inférieure au moins une couche favorisant l'adhésion (222) et une couche d'un adhésif (650).

4. Structure composite selon l'une quelconque des revendications 1 à 3, dans laquelle ladite au moins une couche de polymère renforcée par des fibres (212) est renforcée par au moins une fibre sélectionnée à partir du groupe constitué de fibre de carbone et fibre de verre.

5. Structure composite selon l'une quelconque des revendications 1 à 4, dans laquelle ladite couche d'un adhésif (650) est une couche d'un adhésif époxy.

6. Procédé de morphage d'une structure composite comprenant les étapes de :
fourniture d'une première pluralité de fils préimprégnés de polymère renforcés par des fibres (212) ;
fourniture d'une seconde pluralité de couches d'alliage à mémoire de forme revêtues chacune avec un adhésif sur au moins une d'une surface supérieure et inférieure ; et
morphage de ladite structure composite par chauffage à une température prédéterminée à laquelle ledit alliage à mémoire de forme se transforme en passant d'un premier état cristallin à un second état cristallin,
dans lequel une interface (232) entre une couche de film métallique (202) et la couche de polymère renforcée par des fibres (212) est structurée pour fournir une couche de gradient qui passe d'une surface métallique de nickel-titane à une matrice de polymère (320).

7. Procédé de morphage d'une structure composite selon la revendication 6, comprenant en outre l'étape de fourniture de ladite pluralité de couches d'alliage à mémoire de forme dans un alliage de nickel-titane.

8. Procédé de morphage d'une structure composite selon l'une quelconque des revendications 6 à 7, comprenant en outre l'étape de chauffage de ladite structure composite à une température d'au moins 43 °C, (110 °F) pendant ladite étape de morphage.

9. Procédé de morphage d'une structure composite selon l'une quelconque des revendications 6 à 8, comprenant en outre l'étape de chauffage de ladite structure composite à une température entre environ 43 °C (110 °F) et environ 160 °C (320 °F) pendant ladite étape de morphage.

10. Structure composite comprenant l'une quelconque des revendications 1 à 5 qui est formée par le procédé selon l'une quelconque des revendications 7 à 11.

11. Procédé selon l'une quelconque des revendications 6 à 9, qui forme une structure composite comprenant l'une quelconque des revendications 1 à 5.

12. Système de laminé hybride SMA/FML (laminé métallique de fibre) pour produire des propriétés de morphage spécifiques d'une structure composite comprenant l'une quelconque des revendications 1 à 5 qui est formée par le procédé selon l'une quelconque des revendications 6 à 9.
